# FASCICULE DE BREVET EUROPEEN

(11) **EP 2 604 542 B1**
(45) Date de publication et mention de la délivrance du brevet: **04.03.2015**
(21) Numéro de dépôt: 12196565.1
(22) Date de dépôt: 11.12.2012
(51) Int. Cl.: B65D 33/04, B65D 75/58, B65G 51/06

(54) **Emballage à soufflet retourné pour le transport d'articles à l'intérieur d'un tube d'un réseau pneumatique**
Verpackung mit umgedrehtem Balg für den Transport von Artikeln im Innern eines Schlauchs eines pneumatischen Netzes
Packaging with inside-out bellows for transporting articles inside a tube of a pneumatic network

(30) Priorité: 16.12.2011 FR 1161805
(43) Date de publication de la demande: 19.06.2013
(73) Titulaire: Decomatic S.A., 38290 La Verpillière (FR)
(72) Inventeur: Allegre, Jean-Luc, 38460 Trept (FR); Bugnet, Sylvie, 38138 Les Côtes-d'Arey (FR)
(74) Mandataire: Thibault, Jean-Marc

(56) Documents cités:
- EP-A1- 0 664 264
- EP-A1- 1 873 093
- DE-U1- 20 104 886
- FR-A1- 2 839 959
- FR-A1- 2 859 987

## Description

La présente invention concerne le domaine technique des emballages souples destinés au transport d'articles, tel que par exemple des produits pharmaceutiques, des prélèvements effectués dans les centres hospitaliers, des composants électroniques ou de l'argent, et elle vise plus particulièrement le domaine des emballages souples transportés à l'intérieur d'un réseau pneumatique, par aspiration ou soufflerie.

Par exemple, dans le domaine de la collecte de prélèvements sanguins ou autres, il est connu de mettre en oeuvre un réseau pneumatique comportant plusieurs postes de collecte pour des prélèvements placés dans des emballages qui sous l'effet de l'air comprimé du réseau sont acheminés vers un poste central de récupération.

L'état de la technique a proposé diverses solutions de réalisation d'emballages souples. Par exemple, le brevet FR 2 876 679, la demande de brevet EP 1 873 093 ou le brevet FR 2 859 987 décrit un emballage souple comprenant un sac réalisé en une matière plastique soudée dont l'ouverture donnant accès au volume interne est obturable après remplissage. Un tel emballage est équipé d'un système de propulsion à l'intérieur du réseau pneumatique constitué par un soufflet ou deux soufflets. L'emballage présente une largeur à plat de préférence supérieure au diamètre du tube du réseau pneumatique pour être véhiculé de manière optimum par aspiration ou soufflerie.

Il doit être considéré qu'un tel emballage souple, une fois obturé, présente une forme variable qui dépend d'une part, de la taille et/ou du volume du produit inséré à l'intérieur de l'emballage et, d'autre part de la position du produit à l'intérieur de l'emballage. Il s'avère en pratique quelquefois relativement difficile d'insérer un tel emballage à l'intérieur du réseau dans une position idéale pour lui permettre son transport à l'intérieur du réseau. L'introduction d'un tel emballage dans le réseau de transport est d'autant plus difficile que la largeur à plat de l'emballage est de préférence supérieure au diamètre du réseau de transport.

Bien entendu, la largeur de l'emballage est déterminée en fonction du diamètre du tube du réseau pneumatique pour permettre son déplacement par aspiration ou soufflage tout en limitant les phénomènes de frottement pour éviter la détérioration de l'emballage, voire éviter le coincement de l'emballage à l'intérieur du tube.

En effet, il a été constaté des problèmes de coincement des emballages à l'intérieur du tube notamment au niveau du poste central de récupération des emballages. Classiquement, un tel poste de récupération comporte une trappe coulissante obturant de manière étanche le tube. Le retrait de la trappe permet le passage des emballages arrivant à ce poste.

Quelquefois, certains emballages se retrouvent coincés au niveau de la section de passage de la trappe coulissante aménagée dans le tube du réseau pneumatique. Si un tel emballage peut être retiré plus ou moins facilement par l'opérateur, il n'en est pas de même pour les emballages suivants qui se retrouvent coincés en amont du tube. Une telle situation nécessite une intervention de maintenance relativement lourde à mener à bien qui, de façon supplémentaire, retarde la récupération des produits. De façon complémentaire, toute intervention ayant pour objectif de décoincer les emballages à l'intérieur du tube du réseau pneumatique constitue un risque d'endommagement des emballages pouvant aller jusqu'à leur percement, ce qui est susceptible d'entraîner une contamination lorsque l'emballage contient des produits biologiques.

L'objet de l'invention vise à remédier aux inconvénients de l'état de la technique en proposant un nouvel emballage souple de conception simple et peu onéreuse et adapté pour être inséré et transporté de façon optimum à l'intérieur d'un réseau pneumatique de transport tout en évitant de se coincer en tout endroit du réseau pneumatique et en particulier au poste de récupération des emballages.

Pour atteindre un tel objectif, l'emballage selon l'invention comportent un sac réalisé en matière plastique souple possédant une face recto et une face verso délimitant un volume interne fermé accessible par un passage d'accès aménagé dans une face du sac et obturable à l'aide d'un moyen de fermeture étanche, le sac comportant deux bords longitudinaux opposés et deux bords transversaux opposés antérieur et postérieur soudés au moins à leurs extrémités avec les bords longitudinaux, au moins l'un des bords transversaux antérieur étant relié par des parois en matière plastique souple, aux faces recto et verso du sac, les bords longitudinaux des parois étant fermés dans le prolongement des bords longitudinaux du sac pour former un soufflet en délimitant un manchon ouvert à l'opposé dudit bord transversal antérieur par une ouverture.

Selon l'invention, le manchon présente à partir, dudit bord transversal antérieur, une longueur adaptée pour constituer après son retournement autour dudit bord transversal antérieur, une coiffe de protection et de propulsion enveloppant au moins une partie des faces recto et verso du sac à partir dudit bord transversal.

De plus, l'emballage selon l'invention peut présenter en outre en combinaison au moins l'une et/ou l'autre des caractéristiques additionnelles suivantes :
- un bord transversal postérieur, reliés par des parois en matière plastique souple, aux faces recto et verso du sac, les bords longitudinaux des parois étant fermés dans le prolongement des bords longitudinaux du sac pour former un soufflet délimitant un manchon ouvert à l'opposé dudit bord transversal postérieur par une ouverture de retournement, le manchon présentant à partir, dudit bord transversal postérieur, une longueur adaptée pour constituer après son retournement autour dudit bord transversal, une coiffe de protection et de propulsion enveloppant au moins une partie des faces recto et verso du sac à partir dudit bord transversal postérieur,
- un système de propulsion à l'intérieur du réseau pneumatique selon au moins un sens de transport de l'emballage qui est sensiblement perpendiculaire aux bords transversaux,
- le manchon s'étend à partir du bord transversal de manière qu'après son retournement, la coiffe ainsi formée enveloppe au moins le moyen de fermeture étanche du sac,
- le manchon s'étend à partir du bord transversal, de manière qu'après son retournement, la coiffe ainsi formée ne recouvre pas un système d'ouverture facile aménagé sur le sac,
- un manchon s'étend à partir d'un bord transversal, de manière qu'après son retournement, la coiffe enveloppe la totalité du sac pour dépasser de l'autre bord transversal.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue en perspective montrant un premier exemple de réalisation d'un emballage conforme à l'invention dans un état avant fermeture.

La **Figure 2** est une vue en coupe longitudinale de l'emballage illustré à la **Fig. 1****.**

La **Figure 2A** est une vue d'un détail caractéristique de l'emballage conforme à l'invention prise sensiblement selon la ligne A de la **Fig. 2****.**

La **Figure 3** est une vue de l'emballage illustré aux **Fig. 1** et **2** dans un état fermé prêt à être inséré à l'intérieur d'un tube d'un réseau pneumatique.

La **Figure 4** est une vue en perspective montrant un autre exemple de réalisation d'un emballage conforme à l'invention, à deux coiffes de protection et de propulsion, dans un état avant fermeture.

La **Figure 5** est une vue en coupe longitudinale de l'emballage conforme à l'invention illustré à la **Fig. 4****.**

La **Figure 6** est une vue en perspective de l'emballage illustré à la **Fig. 5** en position fermée et pourvu de deux coiffes de protection et de propulsion conformes à l'invention.

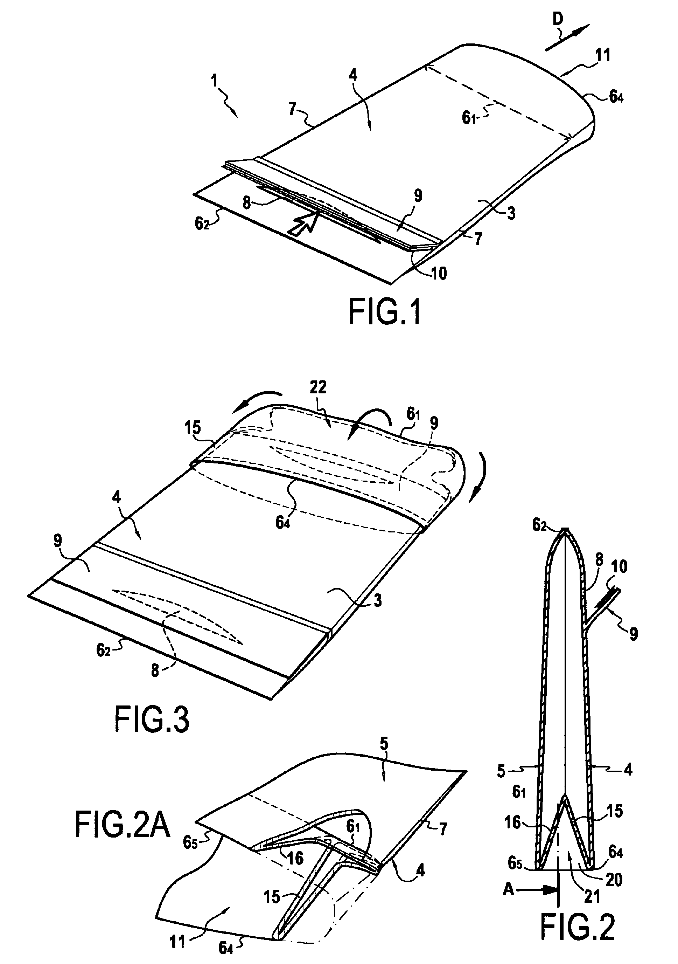

Tel que cela ressort plus précisément des **Fig. 1** à **3****,** l'objet de l'invention concerne un emballage **1** destiné à contenir des articles de toutes natures, tels que par exemple des prélèvements sanguins ou autres, des produits pharmaceutiques ou des billets de banque. Selon une application avantageuse, un tel emballage **1** est destiné à être introduit à l'intérieur d'un tube d'un réseau pneumatique non représenté, mais connu en soi pour permettre le transport d'un lieu à l'autre, d'un article contenu dans l'emballage.

D'une manière connue, l'emballage **1** se présente sous la forme d'un sac réalisé en matière plastique souple de préférence recyclable tel qu'en polyéthylène. Le sac **3** possède une face dite recto **4** et une face dite verso **5** délimité par deux bords transversaux opposés **6₁, 6₂** sensiblement parallèles entre eux et deux bords longitudinaux opposés **7** sensiblement parallèles entre eux. Dans l'exemple illustré, l'emballage **1** présente une forme rectangulaire. Les bords **6₁**, **6₂**, sont dits transversaux en considération d'une part de la forme allongée de l'emballage illustré dans l'exemple de réalisation et d'autre part, de la direction de transport de l'emballage **1** à l'intérieur du réseau pneumatique, schématisée par la flèche **D.** En d'autres termes, la direction **D** de transport de l'emballage **1** est perpendiculaire aux bords transversaux **6₁**, **6₂**. De plus, en considération du sens de transport représenté par la flèche **D** à la **Fig. 1****,** les bords transversaux sont appelés respectivement antérieur **6₁,** et postérieur **6₂.** En d'autres termes, le sac **3** présente ainsi une tête délimitée par le bord transversal antérieur **6₁** et un fond délimité par le bord postérieur **6₂.**

Le sac **3** délimite un volume interne fermé à caractère étanche, mais accessible par un passage d'accès **8** obturable par un moyen de fermeture **9.** Dans l'exemple illustré, la face du sac **3** dans laquelle est aménagé le passage d'accès **8** est la face recto **4.**

Le passage d'accès **8** est adapté pour permettre l'introduction de l'article à l'intérieur du volume interne du sac **3.** Il est à noter que, dans l'exemple illustré à la **Fig. 1****,** le passage d'accès **8** est réalisé à proximité du bord transversal antérieur **6₁** en s'étendant sensiblement parallèlement à ce bord transversal.

Bien entendu, le passage d'accès **8** peut être aménagé à un autre endroit de l'emballage par exemple dans la partie médiane du sac **3.** Le passage d'accès **8** est obturé par tout moyen de fermeture **9.**

Selon un exemple préféré de réalisation, le moyen de fermeture **9** est étanche de manière que l'emballage **1** puisse présenter un caractère étanche notamment pour le transport de prélèvements sanguins ou autres.

Selon cet exemple de réalisation, les bords du sac sont soudés également pour délimiter un volume interne étanche. Il est à noter que la solidité et par suite, l'étanchéité de l'emballage **1** peut être renforcée en rapportant sur tout ou partie des faces **4, 5,** au moins une feuille de plastique souple. Dans le même sens, l'emballage **1** peut être formé par une double paroi.

Selon une variante de réalisation, il est à noter que le passage d'accès **8** peut être obturé à l'aide d'une bande adhésive de sécurité **9** constituant de préférence un témoin d'inviolabilité. Comme illustré plus précisément aux **Fig. 1** et **2** cette bande adhésive **9** est fixée en partie sur l'emballage **1** et se trouve munie d'une protection détachable **10.** Après l'enlèvement de la protection **10,** la bande adhésive **9** est fixée sur l'emballage en venant recouvrir complètement le passage d'accès **8.**

De manière classique, les faces **4, 5** du sac **3** sont réalisées à partir d'une feuille plastique souple repliée ou de deux feuilles plastiques souples superposées dont au moins certains des bords sont soudés de manière à délimiter un volume interne fermé. Il est à noter que dans l'exemple illustré aux **Fig. 1** à **3**, le bord transversal postérieur **6₂** lest fermé par exemple par soudure, sur toute sa longueur, ainsi par exemple que les deux bords longitudinaux **7.** Le bord transversal antérieur **6₁** correspond à un pli d'un soufflet **11.** Le bord transversal antérieur **6₁** est ainsi soudé à ses deux extrémités avec les bords longitudinaux **7.** Le bord transversal antérieur **6₁** s'étend en retrait par rapport aux bords d'extrémités **6₄, 6₅** des faces respectivement recto **4** et verso **5.**

L'emballage **1** présente par son bord transversal délimitant le soufflet **11** à savoir **6₁** dans l'exemple illustré, une largeur à plat de préférence supérieure au diamètre du réseau de transport de manière qu'après formation du soufflet, le diamètre de l'emballage correspondant au diamètre du soufflet soit légèrement inférieur voir égal au diamètre du tube du réseau de transport.

Le soufflet **11** comporte à partir du bord transversal antérieur **6₁**, une première **15** et une deuxième **16** parois en matière plastique souple reliées respectivement aux faces recto **4** et verso **5** formant le sac **3** et plus précisément aux bords d'extrémités **6₄**, **6₅** des faces recto **4** et verso **5.** Les deux parois **15, 16** s'étendent de manière superposée en formant un pli au niveau du bord transversal antérieur **6₁**.

Les deux parois **15** et **16** sont de surface identique en présentant une forme générale rectangulaire. Les parois **15, 16** présentent des bords longitudinaux venant s'établir dans le prolongement des bords longitudinaux **7** du sac **3.** Les bords longitudinaux des parois **15** et **16** sont assemblés ensemble, par exemple, par soudure selon les bords longitudinaux **7** du sac **3.** Les bords longitudinaux des parois **15** et **16** sont assemblés entre eux sur toute leur longueur à partir du bord transversal antérieur **6₁** jusqu'aux bords d'extrémités libres **6₄, 6₅** des faces **4, 5.** Les parois **15, 16** ne sont pas assemblées au niveau du bord transversal antérieur **6₁** avec les faces recto **4** et verso **5.**

Les bords d'extrémité libres **6₄, 6₅** des parois **15** et **16** sont libres ou ouverts l'un par rapport à l'autre et délimitent entre eux, une ouverture **20** dite de retournement comme cela sera compris dans la suite de la description. Ainsi, les deux parois **15** et **16** forment entre elles, côté extérieur du sac **3,** une manche, un élément tubulaire ou cylindrique ou comme désigné dans la suite de la description, un manchon **21** s'étendant à partir du bord transversal antérieur **6₁** et jusqu'aux bords d'extrémité libres **6₄, 6₅.** Un tel manchon **21** formé par les parois **15** et **16** est fermé au niveau du bord transversal antérieur **6₁** et s'ouvre à partir du bord transversal antérieur **6₁** en direction opposée du sac **3** en présentant une forme aplatie au repos, jusqu'à une forme pseudo-tubulaire lorsque les parois **15, 16** sont mises en forme. Le manchon **21** est ainsi ouvert à l'une de ses extrémités par l'ouverture **20** et fermé à son extrémité opposée.

Conformément à l'invention, le manchon **21** présente à partir du bord transversal antérieur **6₁,** une longueur adaptée pour constituer après son retournement autour du bord transversal antérieur **6₁,** une coiffe **22** de protection et de propulsion. Cette coiffe **22** enveloppe ainsi au moins une partie des faces recto **4** et verso **5** du sac **3** à partir de son bord transversal antérieur **6₁**. Cette coiffe **22** présente à partir du bord transversal antérieur **6₁**, une forme pseudo-hémisphérique, complétée en fonction de la longueur de la coiffe, par une forme tubulaire ou pseudo-tubulaire venant entourer le corps du sac **3.** Avantageusement, le manchon **21** possède à partir du bord transversal antérieur **6₁**, une longueur au moins égale à 3 cm et de préférence égale à 7 cm.

Il est à noter que le retournement du manchon **21** c'est-à-dire des parois **15,16** est relativement facile à mener à bien puisqu'il suffit d'écarter les deux parois **15,16** par l'ouverture **20** et de retourner ou retrousser ces deux parois en direction des faces recto **4** et verso **5** en exerçant un effort léger vers l'intérieur du sac sur les coins du sac situés à l'intersection entre le bord transversal antérieur **6₁** et les bords longitudinaux **7.** Les coins du sac situés au niveau du bord transversal antérieur **6₁** se retrouvent ainsi rentrés ou pliés et protégés en étant enveloppés par les parois **15,16.** Il doit être compris que les parois **15, 16** se retrouvent après retournement sur les faces **4, 5** de l'emballage **1.**

Le sac **3** se trouve ainsi enveloppé à partir de son bord transversal antérieur **6₁** sur au moins une partie de sa hauteur et présente une forme générale tubulaire. L'emballage **1** présente ainsi au niveau de son bord transversal **6₁** une forme pseudo hémisphérique facilitant son insertion et son déplacement à l'intérieur du réseau pneumatique puisque la largeur de l'emballage au niveau du bord transversal **6₁** ou de sa tête est inférieure par rapport au reste de l'emballage. Compte tenu de la présence de la coiffe **22,** l'emballage **1** ne présente plus de coins anguleux toujours sujets au coincement de l'emballage à l'intérieur du réseau pneumatique. De manière complémentaire, cette coiffe **22** protège le sac contre l'usure due au frottement de l'emballage à l'intérieur du réseau pneumatique. De plus, cette coiffe **22** assure la propulsion de l'emballage à l'intérieur d'un tube de réseau pneumatique de transport dans la mesure où la coiffe **22** se trouve décollée par rapport au sac **3.**

Selon une variante avantageuse de réalisation, les parois **15** et **16** s'étendent à partir du bord transversal antérieur **6₁** de manière qu'après leur retournement, la coiffe **22** enveloppe au moins le moyen de fermeture étanche **9** du sac **3.** En d'autres termes, la longueur des parois **15, 16** est suffisante pour permettre, après leur retournement, de venir recouvrir ou envelopper le moyen de fermeture **9.** Une telle variante permet d'éviter que le moyen de fermeture **9** constitue un point d'accrochage contribuant au coincement de l'emballage à l'intérieur du réseau pneumatique. De plus, la coiffe **22** vient recouvrir l'éventuel surplus d'adhésif ou de colle du moyen de fermeture **9,** évitant son adhésion sur le tube du réseau pneumatique.

Selon une autre variante de réalisation, les parois **15,16** s'étendent à partir du bord transversal **6₁** de manière qu'après leur retournement, la coiffe **22** enveloppe sensiblement la totalité du sac **3** voire dépasse légèrement le bord transversal postérieur **6₂.** Cette variante de réalisation permet de renforcer la résistance aux frottements de l'emballage.

Il ressort de la description qui précède que l'emballage **1** possède un premier état avant fermeture et un deuxième état après formation de la coiffe **22.** Dans son premier état, les parois **15, 16** s'étendent entre les faces recto et verso du sac **3.** Dans cet état, le sac **3** peut être rempli par l'article et être obturé par son moyen de fermeture étanche **9.** Les parois **15, 16** sont retroussées pour venir recouvrir le sac **3** de sorte que l'emballage **1** occupe un deuxième état pour lequel l'emballage **1** est prêt à être introduit dans le réseau pneumatique. Dans ce deuxième état, l'emballage **1** présente de par la coiffe **22,** une forme pratiquement tubulaire favorisant la propulsion et l'introduction à l'intérieur du tube du réseau pneumatique.

Selon une variante avantageuse de réalisation, le sac **3** comporte un système **40** d'ouverture facile tel que des prédécoupes ou une découpe aménagée dans un aplat de soudure qui, après ouverture, permettent d'accéder à l'article contenu à l'intérieur de sac **3.** Selon cette variante avantageuse, la longueur du manchon **21** ou des parois **15, 16** est telle qu'après le retournement des parois **15, 16,** ces parois **15, 16** ne recouvrent pas le système d'ouverture facile **40** afin que ce dernier soit directement accessible.

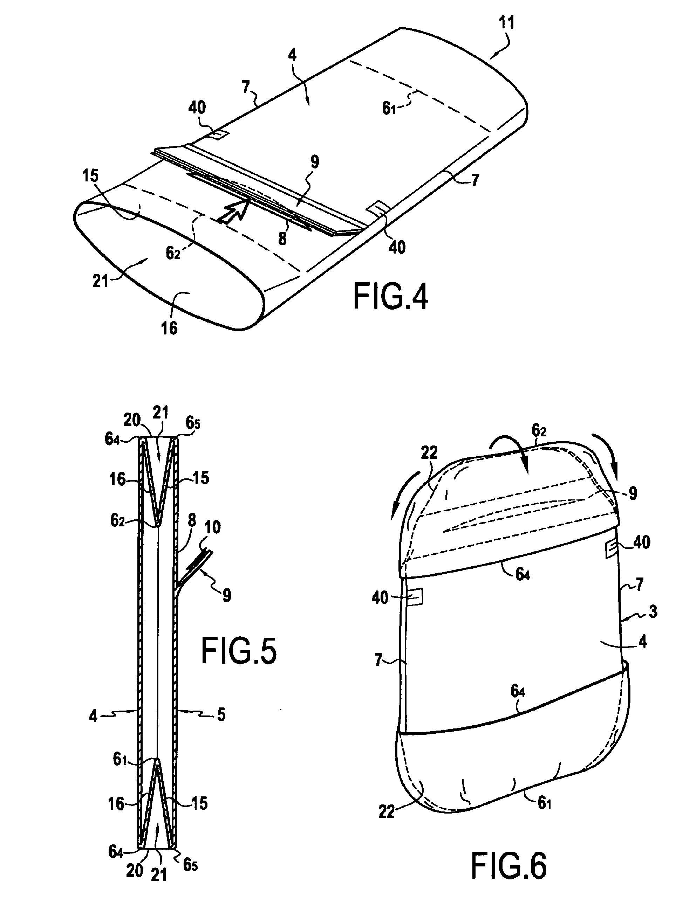

Dans les exemples illustrés aux **Fig. 1** à **3****,** l'enveloppe **1** comporte un manchon **21.** Les **Fig. 4** à **6** illustrent une autre variante de réalisation dans laquelle l'emballage **1** est pourvu de deux manchons **21** disposés symétriquement aux extrémités du sac **3.** Ainsi, l'emballage **1** comporte à partir du bord transversal postérieur **6₂**, un manchon **21** en matière plastique, ouvert à l'opposé du bord transversal postérieur **6₂,** par une ouverture de retournement **20.** Ce deuxième manchon **21** est délimité par deux parois **15, 16** s'étendant à partir du bord transversal postérieur **6₂** qui est soudé à ses deux extrémités au niveau des bords longitudinaux **7** du sac. Le bord transversal postérieur **6₂** s'étend en retrait par rapport aux bords d'extrémité **6₄, 6₅** des faces respectivement recto **4** et verso **5**, jusqu'auxquels les parois **15, 16** se raccordent. Le deuxième manchon **21** et par suite les parois **15, 16** possèdent comme décrit ci-dessus, une longueur adaptée pour constituer après son retournement autour du bord transversal postérieur **6₂**, une coiffe **22** de protection et de propulsion enveloppant au moins une partie des faces recto et verso du sac à partir du bord transversal postérieur **6₂**. Le deuxième manchon **21** s'étendant à partir du bord transversal postérieur **6₂** présente les caractéristiques du premier manchon **21** s'étendant à partir du bord transversal antérieur **6₁** et décrites ci-dessus.

Selon ce mode de réalisation, l'emballage **1** présente deux coiffes **22** s'étendant tête bêche de sorte que l'emballage **1** possède une forme générale tubulaire lorsque les deux manchons sont retournés. Outre la protection qu'il en découle, les coiffes **22** assurent également la propulsion de l'emballage selon ses deux sens dans le tube du réseau pneumatique.

Il est à noter que les longueurs des deux manchons **21** sont choisies de manière que les coiffes **22** soient distantes l'une de l'autre ou ne se touchent pas par leurs extrémités **6₄, 6₅** afin de pouvoir assurer la propulsion de l'emballage.

Bien entendu, selon la variante illustrée aux **Fig. 4** à **6****,** seul le manchon **21** s'étendant à partir du bord transversal antérieur **6₁** peut être retourné, l'autre manchon **21** s'étendant à partir du bord transversal postérieur **6₂** sans être retourné constituant un autre moyen de propulsion.

Il est à noter qu'il peut être prévu de remplacer le manchon s'étendant à partir du bord transversal postérieur **6₂** par un autre système de propulsion tel que d'une ou plusieurs ailettes de propulsion.

## Revendications

1. Emballage pour le transport d'articles à l'intérieur d'un tube d'un réseau pneumatique, comportant un sac (**3**) réalisé en matière plastique souple possédant une face recto (**4**) et une face verso (**5**) délimitant un volume interne fermé accessible par un passage d'accès (**8**) aménagé dans une face du sac et obturable à l'aide d'un moyen de fermeture étanche (**9**), le sac (**3**) comportant deux bords longitudinaux (**7**) opposés et deux bords transversaux opposés antérieur (**6₁**) et postérieur (**6₂**) soudés au moins à leurs extrémités avec les bords longitudinaux (**7**), au moins l'un des bords transversaux antérieur (**6₁**) étant relié par des parois (**15, 16**) en matière plastique souple, aux bords d'extrémités libres (**6₄, 6₅**) des faces recto (**4**) et verso (**5**) du sac, les bords longitudinaux des parois (**15, 16**) s'étendent dans le prolongement des bords longitudinaux (**7**) du sac en étant assemblés ensemble pour former un soufflet délimitant un manchon (**21**) ouvert à l'opposé dudit bord transversal antérieur (**6₁**) par une ouverture (**20**), **caractérisé en ce que** le manchon (**21**) présente à partir, dudit bord transversal antérieur (**6₁**), une longueur adaptée pour constituer après son retournement autour dudit bord transversal antérieur (**6₁**), une coiffe (**22**) de protection et de propulsion enveloppant au moins une partie des faces recto et verso du sac à partir dudit bord transversal (**6₁**).

2. Emballage selon la revendication 1, **caractérisé en ce qu'il** comporte un bord transversal postérieur (**6₂**), reliés par des parois (**15, 16**) en matière plastique souple, aux faces recto (**4**) et verso (**5**) du sac, les bords longitudinaux des parois (**15, 16**) s'étendent dans le prolongement des bords longitudinaux (**7**) du sac en étant assemblés ensemble pour former un soufflet délimitant un manchon (**21**) ouvert à l'opposé dudit bord transversal postérieur (**6₂**) par une ouverture de retournement (**20**), le manchon présentant à partir, dudit bord transversal postérieur (**6₂**), une longueur adaptée pour constituer après son retournement autour dudit bord transversal (**6₂**), une coiffe (**22**) de protection et de propulsion enveloppant au moins une partie des faces recto et verso du sac à partir dudit bord transversal postérieur (**6₂**).

3. Emballage selon la revendication 1, **caractérisé en ce qu'il** comporte un système de propulsion (**11**) à l'intérieur du réseau pneumatique selon au moins un sens de transport (**D**) de l'emballage qui est sensiblement perpendiculaire aux bords transversaux.

4. Emballage selon l'une des revendications 1 à 3, **caractérisé en ce que** le manchon (**21**) s'étend à partir du bord transversal de manière qu'après son retournement, la coiffe (**22**) ainsi formée enveloppe au moins le moyen de fermeture étanche (**9**) du sac.

5. Emballage selon l'une des revendications 1 à 4, **caractérisé en ce que** le manchon (**21**) s'étend à partir du bord transversal, de manière qu'après son retournement, la coiffe (**22**) ainsi formée ne recouvre pas un système d'ouverture facile (**40**) aménagé sur le sac.

6. Emballage selon l'une des revendications 1 à 5, **caractérisé en ce qu'**un manchon (**21**) s'étend à partir d'un bord transversal, de manière qu'après son retournement, la coiffe (**22**) enveloppe la totalité du sac (**3**) pour dépasser de l'autre bord transversal.

## Patentansprüche

1. Verpackung für den Transport von Artikeln innerhalb eines Rohrs eines pneumatischen Netzes, umfassend einen aus flexiblem Kunststoff gefertigten Beutel (3), der eine Vorderseite (4) und eine Rückseite (5) besitzt, die einen geschlossenen Innenraum begrenzen, der über einen in einer Seite des Beutels ausgebildeten Zugangsdurchgang (8) zugänglich ist und mit Hilfe eines Mittels zum dichten Verschließen (9) verschließbar ist, wobei der Beutel (3) zwei gegenüberliegende Längsränder (7) und zwei gegenüberliegende Querränder, einen vorderen (6₁) und einen hinteren (6₂), die wenigstens an ihren Enden mit den Längsrändern (7) verschweißt sind, umfasst, wobei wenigstens einer, der vordere (6₁), der Querränder, über Wände (15, 16) aus flexiblem Kunststoff mit den freien Endkanten (6₄, 6₅) der Vorder- (4) und der Rückseite (5) des Beutels verbunden ist, die Längsränder der Wände (15, 16) verlaufen zusammengefügt in der Verlängerung der Längsränder (7) des Beutels, um einen Balg zu bilden, der eine entgegengesetzt zu dem vorderen Querrand (6₁) über eine Öffnung (20) offene Manschette (21) begrenzt, **dadurch gekennzeichnet, dass** die Manschette (21) ausgehend von dem vorderen Querrand (6₁) eine angemessene Länge aufweist, um nach ihrem Umwenden um den vorderen Querrand (6₁) eine Schutz- und Antriebshaube (22), die wenigstens einen Teil der Vorder- und der Rückseite des Beutels ausgehend von dem Querrand (6₁) umhüllt, zu bilden.

2. Verpackung nach Anspruch 1, **dadurch gekennzeichnet, dass** sie einen hinteren Querrand (6₂), der über Wände (15, 16) aus flexiblem Kunststoff mit der Vorder- (4) und der Rückseite (5) des Beutels verbunden ist, umfasst, die Längsränder der Wände (15, 16) zusammengefügt in der Verlängerung der Längsränder (7) des Beutels verlaufen, um einen Balg zu bilden, der eine entgegengesetzt zu dem hinteren Querrand (6₂) über eine Wendeöffnung (20) offene Manschette (21) begrenzt, wobei die Manschette ausgehend von dem hinteren Querrand (6₂) eine angemessene Länge aufweist, um nach ihrem Umwenden um den Querrand (6₂) eine Schutz- und Antriebshaube (22), die wenigstens einen Teil der Vorder- und der Rückseite des Beutels ausgehend von dem hinteren Querrand (6₂) umhüllt, zu bilden.

3. Verpackung nach Anspruch 1, **dadurch gekennzeichnet, dass** sie ein Antriebssystem (11) innerhalb des pneumatischen Netzes in wenigstens einer Förderrichtung (D) der Verpackung, die zu den Querrändern im Wesentlichen senkrecht verläuft, umfasst.

4. Verpackung nach einem der Ansprüche 1 bis 3, **dadurch gekennzeichnet, dass** die Manschette (21) sich ausgehend von dem Querrand derart erstreckt, dass nach ihrem Umwenden die so gebildete Kappe (22) wenigstens das Mittel zum dichten Verschließen (9) des Beutels umhüllt.

5. Verpackung nach einem der Ansprüche 1 bis 4, **dadurch gekennzeichnet, dass** die Manschette (21) sich ausgehend von dem Querrand derart erstreckt, dass nach ihrem Umwenden die so gebildete Kappe (22) ein an dem Beutel ausgebildetes System zum leichten Öffnen (40) nicht bedeckt.

6. Verpackung nach einem der Ansprüche 1 bis 4, **dadurch gekennzeichnet, dass** eine Manschette (21) sich ausgehend von einem Querrand derart erstreckt, dass nach ihrem Umwenden die Haube (22) den gesamten Beutel (3) umhüllt, um über den anderen Querrand hinauszuragen.

## Claims

1. Packaging for transporting articles inside a tube of a pneumatic network, the packaging comprising a bag (3) made of flexible plastics material possessing a front face (4) and a back face (5) defining a closed inside volume accessible via an access passage (8) arranged in a face of the bag and closable with the help of sealed closure means (9), the bag (3) having two opposite longitudinal edges (7) and two opposite transverse edges, a leading edge (6₁) and a trailing edge (6₂) that are bonded at least at their ends to the longitudinal edges (7), at least a leading one of the transverse edges (6₁) being connected by walls (15, 16) of flexible plastics material to free end edges (6₄, 6₅) of the front and back faces (4, 5) of the bag, the longitudinal edges of the walls (15, 16) extending in line with the longitudinal edges (7) of the bag and being assembled together to form a bellows defining a sleeve (21) that is open facing away from said leading transverse edge (6₁) via an opening (20), the packaging being **characterized in that** the sleeve (21) presents, starting from said leading transverse edge (6₁), a length that is adapted for the sleeve once it has been turned inside out around said leading transverse edge (6₁), to constitute a protective and propulsive cover (22) surrounding at least a portion of the front and back faces of the bag starting from said transverse edge (6₁).

2. Packaging according to claim 1, **characterized in that** it includes a trailing transverse edge (6₂) connected by walls (15, 16) of flexible plastics material to the front and back faces (4, 5) of the bag, the longitudinal edges of the walls (15, 16) extending in line with the longitudinal edges (7) of the bag and being assembled together to form a bellows defining a sleeve (21) that is open facing away from said trailing transverse edge (6₂) via an opening (20) for turning inside out, the sleeve presenting, starting from said trailing transverse edge (6₂), a length that is adapted for the sleeve, once it has been turned inside out around said transverse edge (6₂) to constitute a protective and propulsive cover (22) covering at least a portion of the front and back faces of the bag from said trailing transverse edge (6₂).

3. Packaging according to claim 1, **characterized in that** it includes a propulsion system (11) for propelling it inside the pneumatic network in at least one travel direction (D) of the packaging that is substantially perpendicular to the transverse edge.

4. Packaging according to any one of claims 1 to 3, **characterized in that** the sleeve (21) extends from the transverse edge in such a manner that, once it has been turned inside out, the cover (22) formed in this way covers at least the sealed closure means (9) of the bag.

5. Packaging according to any one of claims 1 to 4, **characterized in that** the sleeve (21) extends from the transverse edge in such a manner that, once it has been turned inside out, the cover (22) formed in this way does not cover an easy-opening system (40) formed in the bag.

6. Packaging according to any one of claims 1 to 4, **characterized in that** the sleeve (21) extends from a transverse edge in such a manner that, once it has been turned inside out, the cover (22) covers all of the bag (3) so as to project beyond the other transverse edge.
